**Europäisches Patentamt**

**European Patent Office**

**Office européen des brevets**

(11) Veröffentlichungsnummer: **0 120 999**

**A2**

(12) **EUROPÄISCHE PATENTANMELDUNG**

(21) Anmeldenummer: **83112880.6**

(22) Anmeldetag: **21.12.83**

(51) Int. Cl.³: **G 01 L 1/24**
G 01 L 11/00, G 01 L 23/16
G 01 G 9/00, G 01 M 11/08

(30) Priorität: **30.03.83 DE 3311524**

(43) Veröffentlichungstag der Anmeldung:
**10.10.84 Patentblatt 84/41**

(84) Benannte Vertragsstaaten:
**CH FR GB LI NL SE**

(71) Anmelder: **Licentia Patent-Verwaltungs-GmbH**
**Theodor-Stern-Kai 1**
**D-6000 Frankfurt/Main 70(DE)**

(72) Erfinder: **Winterhoff, Horst, Dipl.-Phys.**
**Kiefernweg 8**
**D-6072 Dreieich(DE)**

(74) Vertreter: **Lertes, Kurt, Dr. et al,**
**Licentia Patent-Verwaltungs-GmbH Theodor-Stern-Kai 1**
**D-6000 Frankfurt/M 70(DE)**

(54) **Faseroptischer Sensor für Kraft- und Druckmessungen sowie für Überwachungs- und Schutzzwecke.**

(57) Die Erfindung bezieht sich auf einen faseroptischen Sensor für die Kraft- und Druckmessung sowie für Überwachungs- ung Schutzzwecke, der aus einer Lichtleitfaser besteht, in die Licht eingekoppelt wird, das von einem der Lichtleitfaser zugeordneten lichtempfindlichen Detektor empfangen wird, wobei die Krafteinwirkung senkrecht zur Längsachse der Lichtleitfaser erfolgt und die Lichtleitfaser nur infinitesimal verformt wird. Die Lichtleitfaser ist als Monomode-Lichtleitfaser (1, 1') ausgebildet, auf die eine Kraft oder ein Druck einwirkt, und zur Auswertung ist die durch die Kraft oder den Druck bewirkte Änderung des Polarisationszustandes in der Lichtleitfaser herangezogen.

EP 0 120 999 A2

0120999

Licentia Patent-Verwaltungs-GmbH
Theodor-Stern-Kai 1
D-6000 Frankfurt 70

F 83/15

# Faseroptischer Sensor für Kraft- und Druckmessungen sowie für Überwachungs- und Schutzzwecke

Die Erfindung bezieht sich auf einen faseroptischen Sensor nach dem Oberbegriff des Anspruchs 1.

Es ist bekannt, bestimmte die Lichtausbreitung in einer Lichtleitfaser kennzeichnende Größen, wie beispielsweise Brechungsindex und Längenänderung der Faser zur Bestimmung physikalischer Größen, wie beispielsweise Druck, Temperatur u. dgl., heranzuziehen; der Druck kann sich auf die Amplitude und Phase der sich in der Lichtleitfaser ausbreitenden Lichtwelle auswirken. Für die Messung der genannten Größen sind faseroptische Interferometer bekannt, die von einer Meß-Lichtleitfaser und einer Referenz-Lichtleitfaser Gebrauch machen, in die ein Lichtstrahl eingekoppelt wird (FIBEROPTIC SENSORS, Dynamic Systems, Inc., 1982, S. 4 - 7). Mit derartigen Interferometern wird zwar eine hohe Meßempfindlichkeit erzielt, der erforderliche technische Aufwand ist jedoch beträchtlich; derartige Interferometer werden hauptsächlich in Laboratorien verwendet und sind als robuste Betriebsgeräte für einen einfachen Einsatz auf den unterschiedlichsten Meßgebieten weniger geeignet.

Es ist auch eine Einrichtung zur Kraftmessung mit einer einzigen Lichtleitfaser bekannt, deren einem Ende eine Strahlungsquelle und deren anderem Ende ein lichtempfindlicher Detektor zugeordnet ist. Die geradlinig ausgelegte Lichtleitfaser ruht in einem bestimmten Bereich auf einer feststehenden Unterlage, deren der Lichtleitfaser zuge- wandte Fläche etwa dreieckförmig ausgebildete Erhebungen und Vertiefungen aufweist; es ist ferner über der Lichtleitfaser ein Druckelement vorgesehen, deren der Lichtleitfaser zugewandte Fläche ebenfalls mit gleichen, jedoch versetzten Erhebungen und Vertiefungen wie die Unterlage versehen ist (Broschüre FIBEROPTIC SENSORS, Dynamic Systems, Inc., 1982, S. 5 - 9 bis 5 - 12). Wird auf das Druckelement eine Kraft ausgeübt, so wird der zwischen der Unterlage und dem Druckelement befindliche Bereich der Lichtleitfaser in der Länge mehrfach etwa wellenförmig verbogen (microbending). Durch die mehrfachen, der Lichtleitfaser erteilten Krümmungen gelangt die am einen Ende eingekoppelte Strahlung nicht mit gleicher Intensität an das andere Ende der Lichtleitfaser und damit auf den zugeordneten Detektor, sondern ein Teil der Strahlung tritt an den Krümmungsstellen in den Mantel der Lichtleitfaser ein und wird dort mehr oder minder schnell absorbiert. Die Strahlungsintensität an der Austrittsstelle der Lichtleitfaser wird damit durch äußere Parameter (Ausbildung der an der Lichtleitfaser anliegenden wellenförmig gestalteten Flächen von Unterlage und Druckelement, Steilheit der erzeugten Krümmung) bestimmt und es wird kein linearer Zusammenhang zwischen Krafteinwirkung und am Faserende austretender Strahlintensität er- reicht. Bei großen Sensorlängen ist das micro-bend-Verfahren praktisch nicht anwendbar, da über die volle Länge die Biegeelemente angebracht sein müßten. Das Fa- sermaterial muß ausreichend bruchsicher sein, um die Ver- biegungen aufnehmen zu können.

Der Erfindung liegt die Aufgabe zugrunde, einen faseroptischen Sensor zur Kraft- und Druckmessung sowie für Überwachungs- und Schutzzwecke zu schaffen, dessen Lichtleitfaser in Längsrichtung keinerlei wellenförmigen, relativ großen Krümmungen ausgesetzt werden muß, sondern die durch die Krafteinwirkung nur infinitesimal verformt wird.

Diese Aufgabe wird erfindungsgemäß durch die im Anspruch 1 gekennzeichneten Merkmale gelöst.

Vorteilhafte Weiterbildungen der Erfindung sind in den Unteransprüchen gekennzeichnet.

Durch die Erfindung werden insbesondere folgende Vorteile erzielt:
Die Lichtleitfaser wird nicht in ihrer Längsachse verbogen, so daß diesbezüglich keine Bruchgefahr besteht;
zur Messung werden nur die der Lichtleitfaser eigenen Parameter herangezogen, so daß die Messung frei von äußeren Einflüssen ist;
die empfindliche Länge der Lichtleitfaser, die Sensorlänge, kann in weiten Grenzen variieren;
die Lichtleitfaser ist über ihre volle Länge belastungsempfindlich;
die Lichtleitfaser kann nur über einen Teil ihrer Länge oder über die volle Länge belastet werden, bei Verwendung einfachster Druckmittel;
zwischen der Krafteinwirkung und deren Anzeige besteht im Falle kleiner Kräfte ein linearer Zusammenhang;
für große Kräfte ergeben sich durch Abzählen von Nulldurchgängen unmittelbar digitale Meßwerte.

Die Erfindung wird nachstehend anhand eines in der Zeichnung schematisch dargestellten Ausführungsbeispiels näher erläutert. Es zeigen
Fig. 1 eine Monomode-Lichtleitfaser als Kraft- und Drucksensor, deren einem Ende eine Strahlungsquelle und ein Polarisator und deren anderem Ende ein Analysator und ein Detektor zugeordnet ist,

Fig. 2 die Änderung der Polarisationszustände im Belastungsbereich der Monomode-Lichtleitfaser in Abhängigkeit von einer Krafteinwirkung auf die Faser,

Fig. 3 die bei einer zeitlinearen Belastungsänderung der Faser vom Detektor ausgegebene Signalspannung,

Fig. 4 die Lage der Polarisationsrichtung über die Länge der Faser zur Kraftrichtung,

Fig. 5 die bei einer tordierten Monomode-Lichtleitfaser sich über deren Länge ergebenden Belastungsempfindlichkeitsbereiche,

Fig. 6 die bei einer tordierten Monomode-Lichtleitfaser und örtlich begrenzter Belastung sich ergebende Empfindlichkeit und den Polarisationsverlauf,

Fig. 7 die bei mit zirkular polarisiertem Licht erregter, tordierter Monomode-Lichtleitfaser und örtlich begrenzter Belastung erhaltene Empfindlichkeit und den Polarisationsverlauf,

Fig. 8 eine Anordnung mit zwei gegeneinander um 45$^{o}$ gedrehte Analysatoren am Strahlaustrittsende der Faser,

Fig. 9 einen vergrößerten Ausschnitt eines Sensors,

Fig.10 einen als Scheibe ausgebildeten Sensor,

Fig.11 die Verwendung einer Sensorscheibe bei einem Zaun,

Fig.12 die Verwendung einer Sensorscheibe bei einem Motorzylinder,

Fig.13 die Verwendung eines bandförmigen Sensors bei einem motorbewegten Fenster eines Automobils.

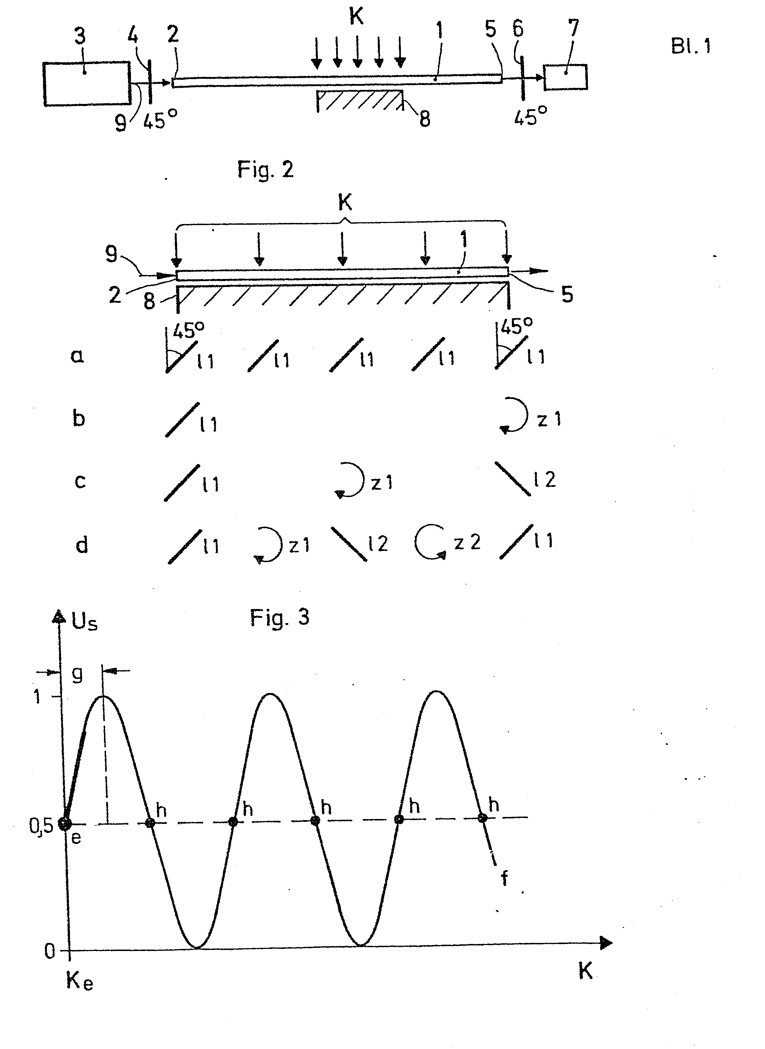

In der Fig. 1 ist eine als Sensor dienende Monomode-Lichtleitfaser 1 dargestellt, die von linear polarisiertem Licht durchstrahlt wird. Dem Anfang 2 der Lichtleitfaser 1 ist eine Strahlungsquelle 3 und ein Polarisator 4 und dem Faserende 5 ein Analysator 6 und ein Detektor 7 zugeordnet. Die Strahlungsquelle 3 kann eine Halbleiter-Laserdiode sein. Verwendet werden kann jedoch auch jede andere Strahlungsquelle; um linear polarisiertes Licht zu erhalten, ist dann im Strahlengang ein Polarisationsfilter anzuordnen. Wie angedeutet, nehmen Polarisator 4 und Analysator 6 einen Winkel von 45° gegen die Richtung der Kraftwirkung K ein.

Ein beliebiger Bereich der Lichtleitfaser 1 ist auf einer feststehenden Unterlage 8 festgelegt. Tritt nun eine Kraftwirkung K senkrecht zur Längsrichtung der Lichtleitfaser 1 und zur Ausbreitungsrichtung der Strahlung auf, dann erfährt der in die Lichtleitfaser 1 eingekoppelte Lichtstrahl 9 in diesem Bereich eine Doppelbrechung. Die beiden Strahlkomponenten mit den Vektoren parallel und senkrecht zu der wirkenden Kraft K haben in der Lichtleitfaser 1 unterschiedliche Ausbreitungsgeschwindigkeiten. Die von der Kraft K abhängige Phasenverschiebung zwischen den Strahlkomponenten führt am Ende des Sensorbereiches zu einer elliptischen Polarisation des Lichtstrahls. Die Phasenverschiebung zwischen den beiden Wellen (Strahlkomponenten) ist ein Maß für die Kraft K.

Aus der Fig. 2 ist ersichtlich, wie sich der Polarisationszustand über die Länge der Lichtleitfaser 1 in Abhängigkeit von der Einwirkung der Kraft K ändert; in der Darstellung a ist der Zustand ohne Krafteinwirkung K angenommen, während in der Darstellung b ein bestimmter Druck, also eine über die Länge der Faser gleichmäßig verteilte Kraft, und in den Darstellungen c, d eine weiter zunehmende Kraft angenommen ist. Wirkt auf die Lichtleitfaser 1 in transversaler Richtung eine Kraft K, so tritt lineare Doppelbrechung auf. Im Beispiel ist angenommen, daß der von der Kraft K beeinflußte Bereich der Lichtleitfaser 1 kurz ist und die Ausgangspolarisationsrichtung, wie angedeutet, um 45° gegen die Richtung der wirkenden Kraft K geneigt ist. Im Ausgangszustand ohne Krafteinwirkung, Darstellung a, bleibt die Strahlung über die Länge der Lichtleitfaser linear polarisiert, wie durch die schrägen Striche 11 angedeutet ist. Bei geringer Krafteinwirkung, Darstellung b, ändert die Strahlung wegen der linearen Doppelbrechung den Polarisationszustand; sie wird elliptisch oder zirkular polarisiert, wie durch den Halbkreis z1 mit Rechtspfeil angedeutet ist. Wird die Krafteinwirkung weiter erhöht, Darstellung c, so entsteht dann am Ende des Krafteinwirkungs-Bereichs nach der Zirkularpolarisation wieder Linearpolarisation, jedoch senkrecht relativ zur ursprünglichen Polarisationsrichtung (Darstellung a), wie durch den schrägen Strich 12 angedeutet ist. Eine weitere Erhöhung der Krafteinwirkung führt dann zu dichter und dichter werdenden Übergängen von Zirkularpolarisation und Linearpolarisation, wie aus der Darstellung d ersichtlich.

Der dem Analysator 6 (Fig. 1) nachgeordnete Detektor 7 liefert eine Signalspannung, die für kleine Kraftänderungen um $K_e$ analog zur wirkenden Kraft K ansteigt, wenn der Analysator 6 senkrecht zur ursprünglichen Polarisationsrichtung orientiert ist und am Ort des Analysators 6 annähernd Zirkularpolarisation vorliegt.

Der Fig. 3 ist der Zusammenhang zwischen dieser Signalspannung des Detektors 7 und der wirkenden Kraft zu entnehmen. Mit zunehmender Kraft K wird der sinusförmige Kurvenzug e bis f durchlaufen. Im Nahbereich g des Anfangspunktes e besteht ein umkehrbar eindeutiger Zusammenhang zwischen der Signalspannung $U_s$ und der Kraft K. Große Kräfte sind durch Abzählen der Bezugslinien-Durchgänge h, im folgenden Nulldurchgänge genannt, bestimmbar. Für große Kräfte liegt somit ein digitaler Kraftsensor vor.

Die Signalspannung $U_s$ nach Fig. 3 ergibt sich bei zeitlinearer Krafterhöhung, beginnend bei einer Kraft $K_e$, bei der am Detektor 7 Zirkularpolarisation auftritt. Bei Auftreten der linearen Polarisationszustände 11 (Fig. 2) ergibt sich unter den angegebenen Polarisations- und Orientierungsverhältnissen ein Maximum der Signalspannung

$U_s$, vorliegend zu 1 normiert, bei Auftreten der zu 11 senkrechten, linearen Polarisationszustände 12 ergibt sich ein Spannungsminimum bei 0. Bei Auftreten der zirkularen Polarisationszustände z1, z2 geht die Signalspannung $U_s$ durch den Wert 0,5.

Der Sensor liefert also bereits digitalisierbare Signale; die Anzahl der Durchgänge n wächst mit der auf die Lichtleitfaser wirkenden Kraft K. Die Anzahl der Durchgänge ergibt sich zu

$$n = a . \int_0^L K \, ds$$

wobei K die pro Längeneinheit auf die Lichtleitfaser wirkende Kraft ist, ds ein Wegelement, L die Länge des Belastungsbereiches der Faser und a eine Materialkonstante.

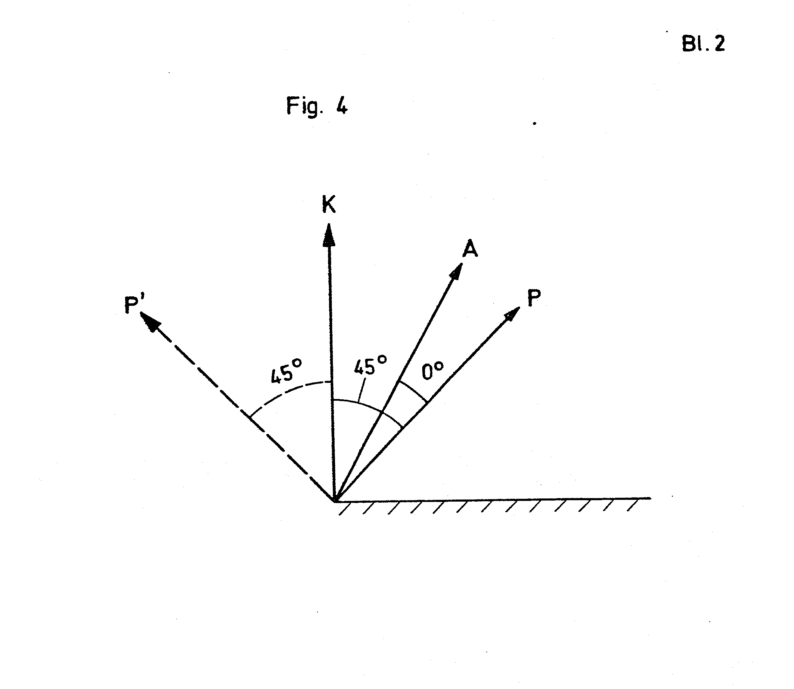

Um ein integrales Verhalten über die Länge der Lichtleitfaser 1 bezüglich der Krafteinwirkung zu erreichen, muß der Winkel zwischen der Polarisationsrichtung und Kraftrichtung konstant gehalten werden; die größte Signalempfindlichkeit ergibt sich, wenn die Polarisationsrichtung P $45^0$ gegen die Kraftrichtung K gedreht ist, wie in der Fig. 4 angedeutet ist. Dargestellt sind die Kraftrichtung K, die Polarisationsrichtung P und die Analysatorrichtung A; die Polarisationsrichtung P ist um $45^0$ gegen die Kraftrichtung K gedreht, wodurch größte Belastungsempfindlichkeit der Lichtleitfaser 1 erzielt wird. Die Analysatorrichtung A wird zweckmäßig etwa gleich der Polarisationsrichtung P gewählt; wie gestrichelt angedeutet und mit P' bezeichnet, kann die Polarisationsrichtung auch um $90^0$ gedreht sein, so daß sie ebenfalls einen Winkel von $45^0$ mit der Kraftrichtung K einschließt; in diesem Fall ergeben sich Signale mit gleicher Empfindlichkeit und gleiche Anzahl der Durchgänge, jedoch beträgt die zur Kraft Null gehörige Signalspannung dann nicht Eins, sondern Null.

8

Bleibt also ohne Krafteinwirkung die Polarisationsrichtung P über die gesamte Länge der Lichtleitfaser erhalten, so ist an jeder Stelle der Lichtleitfaser die gleiche Belastungsempfindlichkeit erreicht. Monomode-Lichtleitfasern können im Querschnitt ellipsenförmig sein; in diesem Fall darf sich die Ellipse über die Länge der Lichtleitfaser in ihrer Lage nicht ändern. Es können auch polarisationserhaltende Monomode-Lichtleitfasern mit eingeprägter Form- und Druckanisotropie verwendet werden (EP-OS 0067 017).

Ist der Winkel zwischen Kraftrichtung K und Polarisationsrichtung P > 45°, so ergibt sich lediglich eine geringe Belastungsempfindlichkeit der Lichtleitfaser. Die geringste Belastungsempfindlichkeit ergibt sich, wenn die Polarisationsrichtung P mit der Kraftrichtung K übereinstimmt oder wenn die Polarisationsrichtung P senkrecht auf der Kraftrichtung K steht; es verringert sich entsprechend die Signalspannung, die Anzahl der Durchgänge bleibt davon jedoch unberührt.

Die Polarisationsrichtung P braucht nicht über die volle Länge der Monomode-Lichtleitfaser gegenüber der Kraftrichtung konstant gehalten zu werden, wenn man nicht gleichzeitig über die ganze Länge der Lichtleitfaser volle Meßempfindlichkeit verlangt. Für derartige Fälle wird einer im Handel erhältlichen Monomode-Lichtleitfaser eine Torsion erteilt.

Eine um ihre Längsachse tordierte Lichtleitfaser hat den Vorteil, daß durch die Torsion der Einfluß einer gegebenenfalls in der Faser vorhandenen linearen Doppelbrechung verschwindet. In einer Lichtleitfaser, die beispielsweise pro Meter Länge 15mal um ihre Längsachse tordiert ist, verschwindet der Einfluß der linearen Doppelbrechung, der durch die eventuell vorhandene Abweichung des Faserquerschnittes von der Kreisform herrührt.

Mit der Torsion verknüpft ist eine über die Länge der
Faser entstehende Drehung der Polarisationsebene, die
etwa $30^{\circ}$ beträgt bei einer erteilten Torsion von $360^{\circ}$.
Ein Vorteil einer tordierten Lichtleitfaser besteht darin, daß eine unbelastete tordierte Faser einen definierten Ausgangszustand der Polarisation besitzt. Die
Strahlung ist in unbelastetem Zustand überall linear
polarisiert und die Polarisationsebene dreht sich in
Ausbreitungsrichtung des Lichtstrahls mit der Torsion
kontinuierlich.
Bei einer tordierten Monomode-Lichtleitfaser ergeben
sich über deren Länge alternierende Belastungsempfindlichkeitsbereiche, in denen die Polarisationsrichtung P
$45^{\circ}$ gegen die Kraftrichtung K liegt. Bei einer beispielsweise pro Meter 15mal tordierten Faser von 3 m
Länge, zu der eine Drehung der Polarisationsebene von
etwa $4 \times 360^{\circ}$ gehört, ergeben sich über die Länge der
Faser 14 Teilbereiche mit gleichartiger Belastungsempfindlichkeit. Je mehr Torsion eine Faser erhält, um
so mehr Empfindlichkeitsbereiche entstehen und um so
dichter liegen diese. Zu einer Drehung der Polarisationsebene von $360^{\circ}$ gehören jeweils vier Bereiche mit
maximaler Empfindlichkeit.

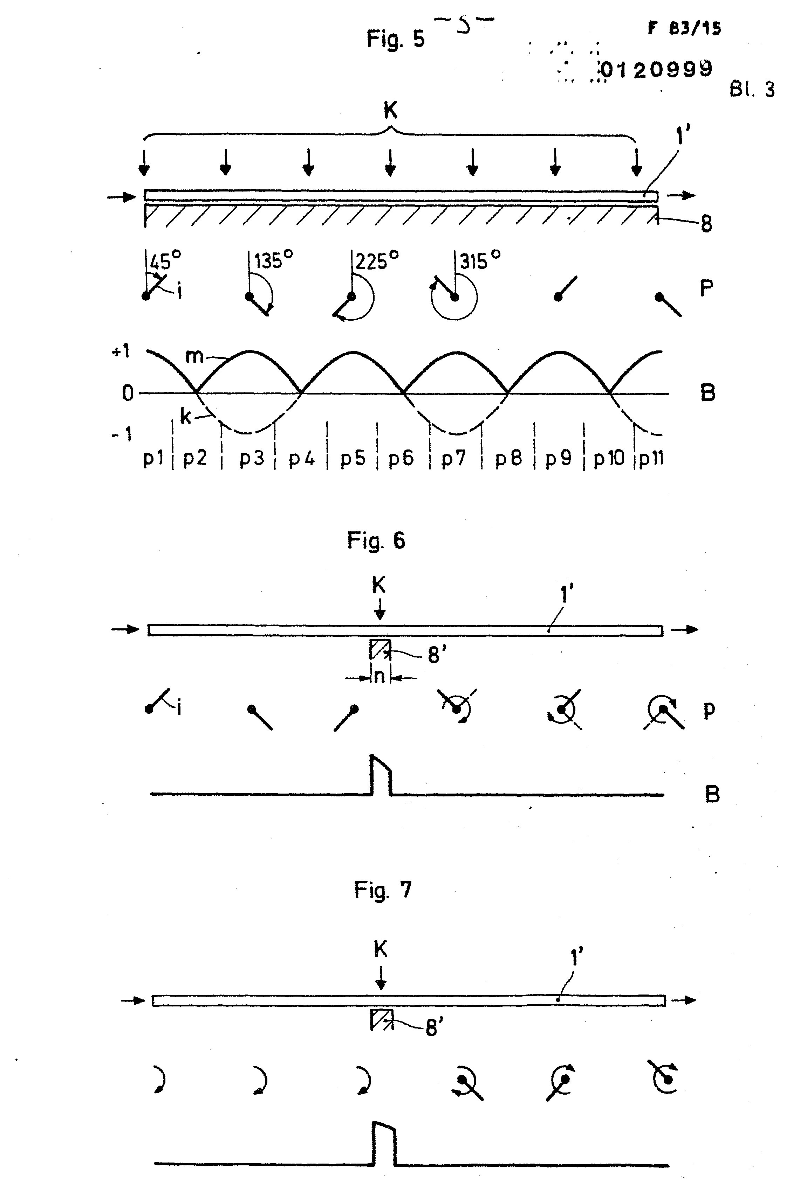

Bei einer tordierten Monomode-Lichtleitfaser ändert sich
also die Polarisationsrichtung  gegenüber der Kraftrichtung periodisch und über die Faserlänge wechseln sich
Bereiche mit maximaler und minimaler Belastungsempfindlichkeit ab, während zwischen diesen Bereichen solche
ohne Belastungsempfindlichkeit liegen, entsprechend
Nulldurchgängen; die Fig. 5 zeigt die bei einer tordierten Monomode-Lichtleitfaser 1' auftretende Abhängigkeit
der Belastungsempfindlichkeit B von der in Faserrichtung
rotierenden Polarisationsrichtung P.

Die mit der Torsion der Faser 1' verknüpfte Drehung der
Polarisationsebene ist durch die Richtungsfahnen i angedeutet; wie ersichtlich, ergeben sich bei einer Einwirkung einer Kraft K auf die Faser 1' über dessen Länge Bereiche, in denen die Polarisationsrichtung P in bezug zur Kraftrichtung die verschiedensten Winkel einnimmt. Im Bereich p1 liegt die Polarisationsrichtung 45° positiv zur Kraftrichtung K; die Belastungsempfindlichkeit B erreicht ihr positives Maximum. Im Bereich p2 liegt die Polarisationsrichtung P annähernd senkrecht zur Kraftrichtung K, angedeutet durch 0; die Belastungsempfindlichkeit geht in diesem durch Null.

Im Bereich p3 liegt die Polarisationsrichtung P 135° gedreht zur Kraftrichtung; die Belastungsempfindlichkeit B ist wieder groß, hat in diesem Bereich jedoch ein negatives Vorzeichen, wie durch die gestrichelte Kurve k angedeutet. Die durchgezogene Kurve m zeigt den Verlauf der absoluten Empfindlichkeit.

In den anschließenden Bereichen p4 bis p11 wiederholen sich die Belastungsempfindlichkeiten der tordierten Faser 1' wie vorstehend beschrieben.

In der Fig. 6 ist angenommen, daß eine tordierte Monomode-Lichtleitfaser 1' örtlich begrenzt im Bereich n von einer Kraft K belastet wird; die mit der Torsion der Faser 1' verknüpfte Drehung der Polarisationsebene ist wieder durch die Richtungsfahnen i angedeutet. Die Ausbreitung eines durch eine Krafteinwirkung am Meßort n bedingten linearen Polarisationszustandes ist durch die Fahnen i gekennzeichnet. Zu dem bei einer anderen Kraft entstehenden, dazu senkrechten Polarisationszustand gehören die gestrichelt gezeichneten Richtungsfahnen. Die bei bestimmten Krafteinwirkungen entstehenden zirkularen Polarisationszustände bleiben längs der Faser erhalten, angedeutet durch die Rotationspfeile.

In der Fig. 7 liegen die gleichen Verhältnisse vor, jedoch ist die tordierte Monomode-Lichtleitfaser 1' mit zirkular polarisiertem Licht erregt, wie durch die Rotationspfeile angedeutet ist.

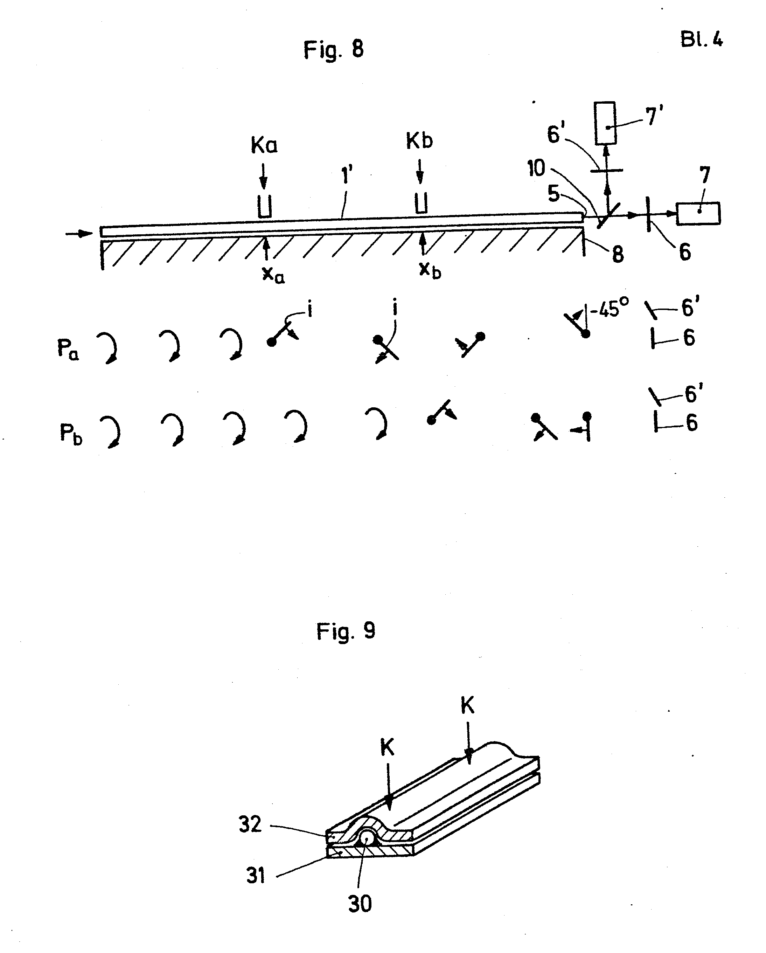

Bei der Ausbildung nach der Fig. 8 ist es vorteilhaft, dem Ende 5 einer tordierten Monomode-Lichtleitfaser 1' zwei Analysatoren 6 und 6' mit vorgeschaltetem Strahlteiler 10 zuzuordnen. Die Analysatoren 6, 6' sind gegeneinander um $45°$ gedreht. Jedem Analysator ist ein Detektor 7, 7' nachgeordnet.

Im Fall Pa wirkt auf die Faser örtlich begrenzt die Kraft Ka. Das in die Faser eingekoppelte zirkular polarisierte Licht wird am Ort $x_a$ durch die Krafteinwirkung im Polarisationszustand verändert. Bei der hier angenommenen Kraftrichtung ist die Strahlung hinter dem Belastungsort linear polarisiert, wie durch die Richtungsfahne i angedeutet. Diese Polarisationsrichtung ändert sich wegen der Torsion der Faser gemäß der Darstellung. Das Ende der Faser erreicht die Strahlung in diesem Beispiel unter einem Winkel von $-45°$ gegen die Kraftrichtung. Hat der Analysator 6' die Stellung parallel zur Polarisationsrichtung, dann schwankt die zugeordnete Detektorspannung abhängig von der Größe der Kraft zwischen 0 und 1. Hinter dem Analysator 6 ergibt sich dagegen immer eine zugeordnete Detektorspannung 0,5.

Im Fall Pb erfolgt die gleiche Krafteinwirkung am Ort $x_b$. Die Erregung mit zirkular polarisierter Strahlung führt dazu, daß die Polarisation hinter dem Belastungsort $x_b$ die gleiche Richtung hat wie im Fall Pa. Die Drehung der Polarisationsebene bis zum Faserende ist wegen der kleineren Weglänge hier jedoch derart, daß die Polarisationsfahne am Faserende nach unten zeigt, wie angedeutet. In diesem Fall schwankt die Detektorspannung hinter dem Analysator 6 zwischen 0 und 1, während die Detektorspannung hinter dem Analysator 6' unabhängig von der Größe der Kraft bei 0,5 bleibt. Durch die Verwendung der beiden Analysatoren 6, 6' oder noch mehrerer mit entsprechenden Detektoren wird also erreicht, daß für jeden Belastungsort einer der Detektoren eine hohe Meßspannung liefert.

Mittels der dem oder den Detektoren nachgeordneten Elektronik werden beispielsweise die bei einer Faserbelastung durchlaufenen Nulldurchgänge der Detektorsignalspannung in einen Zähler eingezählt; die Anzeige entspricht dann der Belastungsänderung, die die Faser seit dem Meßbeginn erfahren hat.

Die Kraftmessung kann in Transmission und auch in Remission, also mit einer Spiegelung am einen Ende der Lichtleitfaser, erfolgen; in diesem Fall ergibt sich eine Verdoppelung des Meßeffektes.

Je nach Anwendungszweck können die Monomode-Lichtleitfasern eine Länge haben die nach unten etwa durch den Kernglasdurchmesser und nach oben nur durch die Dämpfungsverluste der Faser auf einige km begrenzt ist.

Wie in der Fig. 9 in vergrößerter Schnitt-Darstellung angedeutet, ergibt sich ein Sensor, wenn die Monomode-Lichtleitfaser 30 fest auf einer beispielsweise flexiblen bandförmigen Unterlage 31 aufgebracht und mit einem Deckband 32 abgedeckt ist. Die Kraft K wirkt über das Deckband 32 auf die Lichtleitfaser 30. Ist eine nicht tordierte Monomode-Lichtleitfaser verwendet, so ist diese derart auf der Unterlage gelagert, daß die Polarisationsrichtung über die Länge der Faser stets etwa 45° gegen die Kraftrichtung liegt. Soll der Sensor Krafteinwirkung lediglich detektieren, so ist die Monomode-Lichtleitfaser 30 tordiert, wie vorstehend erläutert.

Die tordierte oder nicht tordierte Monomode-Lichtleitfaser kann auch in Matten und Läufern aus elastischem Material dicht unter deren Begehoberfläche eingebettet sein; in diesen Fällen kann die Faser gradlinig, mäanderförmig oder in beliebig anderer Konfiguration angeordnet sein. Mit einer derartigen Ausbildung ist ein Begehsensor beliebiger Länge (> 1 km) geschaffen, der eine Begehung detektiert und/oder das Gewicht von Personen auf den
Matten und Läufern feststellt.

Der Sensor kann auch vor Rolltreppen auf Straßen und
Autobahnen anstelle von bisherigen Lichtschranken eingesetzt werden; in auf dem Erdboden liegende elastische
Matten, Bänder o.dgl. beliebiger Abmessungen sind Monomode-Lichtleitfasern in geeigneter Weise eingelegt;
werden diese Sensorelemente von Kraftfahrzeugen überfahren, so wird ein Signal ausgelöst. Der Sensor ist
ferner zur Bestimmung des Ladegewichts von Lastkraftwagen einsetzbar.

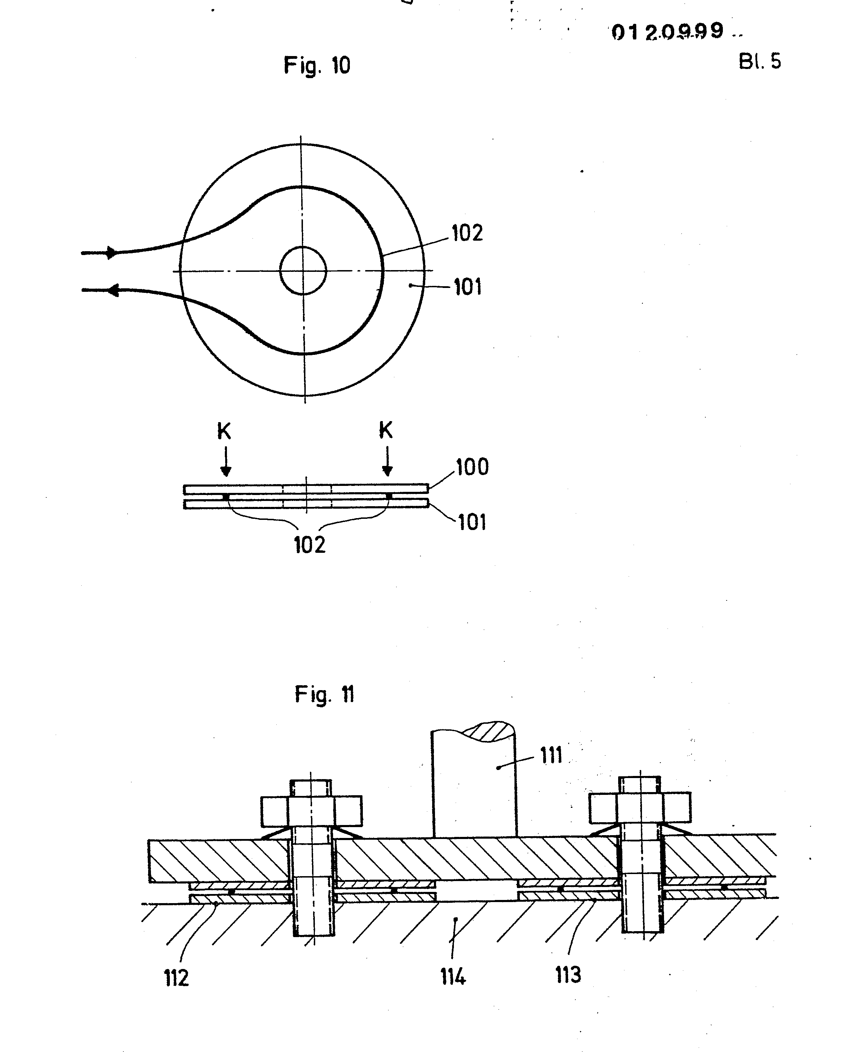

Fig. 10 zeigt eine hierfür verwendbare Sensorscheibe,
die aus zwei elastischen Scheiben 100, 101 besteht, zwischen denen eine Monomode-Lichtleitfaser 102 angeordnet
ist.

Derartige Sensorscheiben können an den vier Ecken der
Ladefläche des LKWs angeordnet sein, mit denen die Gewichtsmessung durchgeführt wird. LKWs können mit derartigen Sensorscheiben und zugehöriger Optik sowie Elektronik
serienmäßig ausgerüstet werden; konventionelle ortsfeste
Wägestellen erübrigen sich damit.

Derartige als Unterlegscheiben verwendbare Sensorscheiben
mit eingebetteten Monomode-Lichtleitfasern können ganz
allgemein zur Gewichtsmessung eingesetzt werden.

Sensorscheiben sind mit Vorteil auch bei Schutzzäunen
für zu sichernde Areale anwendbar, um ein Übersteigen
des Zaunes zu signalisieren. Wie aus der Fig. 11 ersichtlich, ist ein schematisch angedeuteter Pfosten 111 eines
Schutzzaunes über Sensorscheiben 112, 113 auf einem Fundament 114 gelagert; steigt eine Person über den Zaun,
so wirkt deren Gewicht auf die Sensorscheiben 112, 113,
wodurch ein Signal ausgelöst wird.

In der Automobil-Meßtechnik ist die Kenntnis des zeitlichen Verlaufs der Verbrennung im Verbrennungsraum des Motorzylinders erwünscht; es besteht die Forderung, daß nicht direkt im Verbrennungsraum gemessen werden darf. Der Sensor gestattet die Messung der Kompression außerhalb des Motors.

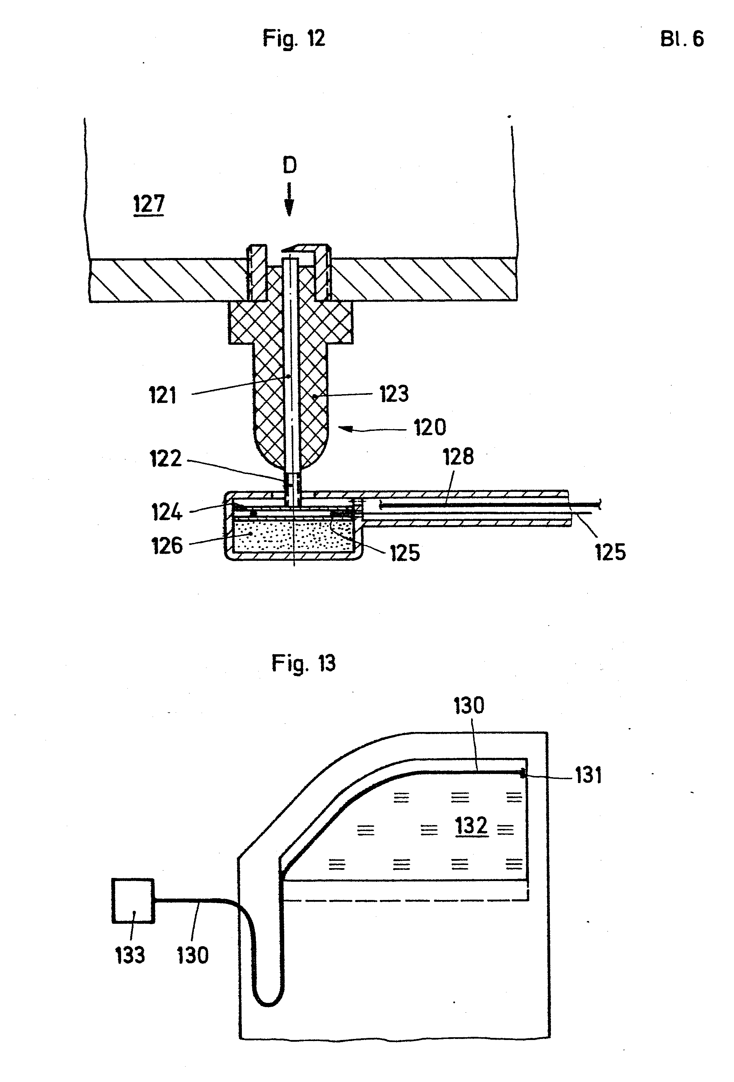

Wie in der Fig. 12 dargestellt, ist hierfür die konventionelle und unveränderte Motor-Zündkerze 120 herangezogen; angedeutet ist lediglich der Leiter 121 mit seinem zugänglichen Ende 122 und der den Leiter umgebende Porzellankörper 123. Am Leiterende 122 ist eine Sensorscheibe 124 mit eingelegter Monomode-Lichtleitfaser 125 angebracht; die Sensorscheibe ist mit einer trägen Masse 126 verbunden. Die im Zylinder 127 entstehende Druckwelle D gibt auf den Zündstift 121 der Zündkerze 120 einen Druckimpuls, der über den Leiter 121 an dessen äußeres Ende 122 gelangt (Zündkerze wirkt als Schallwellenleiter) und auf die mit der trägen Masse 126 verbundene Sensorscheibe 124 trifft, wodurch die Druckwelle D detektiert wird. Mit 128 ist die übliche elektrische Zündkerzenleitung angedeutet.

In der Automobiltechnik ist es bekannt, die Fensterscheiben des Autos mittels eines Motors auf- oder abwärts zu fahren. Zwecks selbsttätiger Abschaltung des Motors im Falle einer Gefahr bei sich aufwärts bewegender Fensterscheibe (Kopfeinklemmung o.dgl.), ist es bekannt, im oberen Teil des Fensterrahmens der Karosserie ein innen metallisiertes Gummirohr zu lagern, das von einem Mikrowellenstrahl durchlaufen wird, der auf einen Detektor trifft. Wird bei sich nach oben bewegendem Fenster nun ein im Fensterausschnitt befindlicher Körperteil (Kopf, Hand) durch die Aufwärtsbewegung der Fensterscheibe gegen das Gummirohr gedrückt, so wird dadurch auch die Rohröffnung zusammengedrückt, so daß der Mikrowellenstrahl nicht mehr auf den Detektor trifft und damit der von diesem Detektor beeinflußte Motor abgeschaltet wird.

15

Ein technisch geringerer Aufwand wird erzielt, wenn zur Abschaltung des Fenstermotors, wie in Fig. 13 dargestellt, ein bandförmiger Sensor 130 mit eingebetteter Monomode-Lichtleitfaser verwendet wird, bei der ein Ende mit einem Reflektor 131 versehen ist; dieser Fenstersensor 130 wird auf dem oberen Rand der Wagen-Fensterscheibe 132 oder im Fensterrahmen angeordnet. Bewegt sich die Fensterscheibe 132 nach oben und wird auf irgendeine Stelle dieses Sensors 130 ein sich auf die Lichtleitfaser übertragender Druck ausgeübt, so wird in einer die Strahlungsquelle und Elektronik enthaltenden Einrichtung 133 ein Signal erzeugt, durch das der Fenstermotor abgeschaltet wird.

Der Sensor kann auch zur Füllstandsmessung verwendet werden. Zur Wasserdruckmessung wird ein bandförmiger Sensor nach Fig. 9 mit seiner Längsrichtung in das Wasser getaucht; der Druck wirkt sich, wie in Fig. 9 mit K angedeutet, auf die Monomode-Lichtleitfaser aus, wodurch der Kompressionsdruck meßbar ist. Hierfür kann auch eine tordierte Faser verwendet werden, wenn die Verpackungsfolien 31, 32 der Torsion der Polarisationsebene folgen. Dabei ist zu beachten, daß die mit der Fasertorsion verknüpfte Torsion der Polarisationsebene wesentlich kleiner als die mechanische Torsion ist.

Ein bandförmiger Sensor entsprechender Länge nach Fig. 9 kann auch horizontal in einer Flüssigkeit gelagert werden, die sich in einem Tank befindet, der Schwankungen ausgesetzt ist. Bei einem Benzintank wird bei fahrendem Kfz das Benzin entsprechend der auftretenden Tankbewegungen "schwappen", wodurch sich Gewichtsverlagerungen des Benzins ergeben, die mittels des Sensors erfaßbar sind.

Der Sensor ist vorteilhaft als Infraschalldetektor und Mikrophon mit Richtcharakteristik verwendbar, mit dem feststellbar ist, aus welcher Richtung der Schall kommt.

Der Sensor ist auch auf Tennisplätzen zur Feststellung von Linienberührungen durch den Tennisball geeignet, wobei aus der Größe und dem Kraftwirkungsverlauf zwischen einer Ballberührung und einer Berührung durch den Spieler unterschieden werden kann. Den Spielfeldlinien entlang werden entsprechend in der Länge bemessene Sensoren mit Monomode-Lichtleitfasern verlegt. Berührt ein Tennisball eine dieser Liniensensoren, so wird durch die Gewichtseinwirkung auf die Lichtleitfaser ein Signal ausgelöst; die Berührung von Linien durch den Spieler läßt sich wegen des unterschiedlichen Belastungsverlaufs einfach von der Ballberührung  unterscheiden.

17

Licentia Patent-Verwaltungs-GmbH

Theodor-Stern-Kai 1

D-6000 Frankfurt 70

F 83/15

Faseroptischer Sensor für Kraft- und Druckmessungen sowie für Überwachungs- und Schutzzwecke

Patentansprüche

1. Faseroptischer Sensor für die Kraft- und Druckmessung sowie für Überwachungs- und Schutzzwecke, bestehend aus einer Lichtleitfaser, in die Licht eingekoppelt ist, das von einem der Lichtleitfaser zugeordneten lichtempfindlichen Detektor empfangen wird und bei dem die Krafteinwirkung senkrecht zur Längsachse der Lichtleitfaser erfolgt, dadurch gekennzeichnet, daß die Lichtleitfaser eine Monomode-Lichtleitfaser(1) ist, auf die eine Kraft oder ein Druck einwirkt, und daß die durch die Kraft oder den Druck bewirkte Änderung des Polarisationszustandes in der Lichtleitfaser zur Auswertung herangezogen ist.

2. Faseroptischer Sensor nach Anspruch 1, dadurch gekennzeichnet, daß die Polarisationsrichtung (P) in der Lichtleitfaser (1) über die Faserlänge angenähert oder gleich $45^\circ$ gegen die auf die Lichtleitfaser wirkende Kraftrichtung (K) gedreht ist.

3. Faseroptischer Sensor nach Anspruch 1,
dadurch gekennzeichnet,
daß der Lichtleitfaser (1') eine Torsion erteilt ist.

4. Faseroptischer Sensor nach Anspruch 3,
dadurch gekennzeichnet,
daß der Lichtleitfaser (1') eine Torsion erteilt ist
und daß die Faser derart verpackt ist, daß die die
Druckmeßrichtung festlegende Verpackungsfläche der
Drehung der Polarisationsebene folgt.

5. Faseroptischer Sensor nach Anspruch 3,
dadurch gekennzeichnet,
daß dem Lichtaustrittende der Lichtleitfaser (1') ein
Strahlteiler (10) und mehrere Analysatoren (6, 6') mit
nachgeordneten lichtempfindlichen Detektoren (7, 7')
zugeordnet ist.

6. Faseroptischer Sensor nach Anspruch 1 oder einem der
folgenden,
dadurch gekennzeichnet,
daß die Lichtleitfaser (102) zwischen zwei Scheiben
(100, 101) angeordnet ist, die einer Krafteinwirkung
(K) oder einem Druck    ausgesetzt sind.

7. Faseroptischer Sensor nach Anspruch 1 bis 4,
gekennzeichnet durch die Anwendung zur Messung der
Kompression bei einem Verbrennungsmotor, indem dem
äußeren Anschluß (122) der Zündkerze (120) ein mit
träger Masse (126) behafteter Sensor (124) mit Lichtleitfaser (125) zugeordnet ist, auf den die über den
Leiter (121) der Zündkerze (120) übertragene Druckwelle (D) einwirkt.

8. Faseroptischer Sensor nach Anspruch 1 bis 4, gekennzeichnet als Sicherheitsschalter bei sich in Bewegung befindlichen Gegenständen, die bei Berührung gestoppt werden sollen.

9. Faseroptischer Sensor nach Anspruch 8, gekennzeichnet durch die Anwendung als Fenstersensor bei Automobilen, indem auf dem oberen Rand des zu bewegenden Fensters (132) oder im Rahmen für dieses Fenster eine Lichtleitfaser (130) angeordnet ist.

10. Faseroptischer Sensor nach Anspruch 1 bis 4, gekennzeichnet durch die Verlegung in Geh- oder Fahrwegen zur Gewichtsmessung und/oder Detektierung von Personen und/oder Fahrzeugen.

Fig. 1 — 21 — M 21 4 25

0120999

Bl. 1

F. 83/15

Fig. 1

Fig. 2

Fig. 3

F 53/15
0120999

Fig. 4

Fig. 5 — 5 —

F 83/15

0120999

Bl. 3

Fig. 5

Fig. 6

Fig. 7

Fig. 8

Ka     Kb     1'

$x_a$     $x_b$

6'   7'
10
5
8   6   7

$P_a$

$P_b$

-45°   6'
6

6'
6

Fig. 9

K     K

32
31
30

Fig. 10

102

101

K          K

100

101

102

Fig. 11

111

112          114     113

Fig. 12

D

127

121    123

120

122

124

126    125

128

125

Fig. 13

130

131

132

133    130